Europäisches Patentamt

European Patent Office

Office européen des brevets

(19)

(11) Numéro de publication : **0 332 691 B1**

## (12) FASCICULE DE BREVET EUROPEEN

(45) Date de publication du fascicule du brevet :
**05.08.92 Bulletin 92/32**

(51) Int. Cl.[5] : **A23J 1/06,** A22B 5/04

(21) Numéro de dépôt : **88908708.6**

(22) Date de dépôt : **29.09.88**

(86) Numéro de dépôt international :
**PCT/FR88/00481**

(87) Numéro de publication internationale :
**WO 89/02704 06.04.89 Gazette 89/08**

(54) **PROCEDE ET APPAREIL DE RECUPERATION DE MATIERES ORGANIQUES ET D'ELIMINATION DE RESIDUS DE SANG D'ABATTOIRS.**

(30) Priorité : **29.09.87 FR 8713459**

(43) Date de publication de la demande :
**20.09.89 Bulletin 89/38**

(45) Mention de la délivrance du brevet :
**05.08.92 Bulletin 92/32**

(84) Etats contractants désignés :
**AT BE CH DE FR GB IT LI LU NL SE**

(56) Documents cités :
**FR-A- 2 485 390**
**FR-A- 2 546 723**

(56) Documents cités :
**Journal of Agricultural and Food Chemistry, volume 30, no. 4, July-August 1982 (Washington, US) T.M. Jones et al.:"Characterization of coagulant-protein complexes produced by chemical coagulation of industrial whole animal blood", pages 715-719,see page 715**

(73) Titulaire : **BOZEC, Robert Francois**
**"La Feliere" Missy**
**F-14210 Evrecy (FR)**

(72) Inventeur : **BOZEC, Robert Francois**
**"La Feliere" Missy**
**F-14210 Evrecy (FR)**

(74) Mandataire : **Phélip, Bruno et al**
**c/o Cabinet Harlé & Phélip 21, rue de La Rochefoucauld**
**F-75009 Paris (FR)**

EP 0 332 691 B1

## Description

La présente invention concerne un procédé et un appareil de récupération de matières organiques et d'élimination de résidus de sang d'abattoirs.

A l'heure actuelle l'évolution technico-économique des activités nécessaires à la mise sur le marché des viandes a provoqué de nombreux changements dans ces métiers traditionnels et en particulier la concentration des opérations d'abattage sur seulement quelques sites industriels.

L'une des conséquences directes d'une telle orientation est l'accumulation importante des déchets ou résidus de ces activités sur les sites en question, ce qui entraîne à court terme pour les responsables de telles unités, l'obligation d'évacuer les effluents et au plus faible coût possible.

Dans de tels abattoirs de dimensions relativement importantes, le sang représente un problème tout-à-fait particulier car il s'agit d'un mélange aqueux dilué qui se dégrade très vite dès qu'il entre au contact de l'oxygène de l'air, d'un produit fortement odorant dont la fermentation naturelle très rapide augmente encore les nuisances olfactives d'une suspension biologique dans laquelle les vecteurs de maladies animales sont parfois présents et peuvent facilement se multiplier.

Il existe donc, de nos jours, un problème d'évacuation et de réutilisation du sang d'abattoirs.

FR-A-2 546 723 et "J. of Agric. and Food Chemistry, vol. 30, No. 4, Juillet-août 1982 (Washington, US), T.M. JONES et al., "Characterization of coagulant-protein complexes produced by chemical coagulation of industrial whole animal blood", pages 715-719 relèvent des procédés de traitement de sang.

Dans l'art antérieur on a recherché à collecter le sang en un point précis de l'abattoir pour ensuite l'évacuer vers des centres de traitement approprié.

Une telle mesure grève le coût d'exploitation des abattoirs car elle entraîne presque toujours des frais importants pour:
– la collecte aussi complète que possible lors de la mise à mort des animaux;
– le stockage adéquat du sang en attente de son enlèvement par le transformateur (une telle conservation devant normalement se faire en cuve réfrigérée);
– le transport par véhicule spécialisé vers des usines de transformation généralement éloignées de plusieurs centaines de kilomètres de l'abattoir;
– le traitement thermique du mélange aqueux par la mise en oeuvre d'équipements complexes donc très coûteux tant à l'achat qu'à l'utilisation, (à titre d'exemple il faut évaporer entre 4 et 8 kg d'eau pour disposer d'un kg d'extrait de poudre de sang sèche, stérilisée et assez stable si elle n'est pas réhydratée).

Depuis quelques années pour pallier aux inconvénients précités, on a mis en oeuvre une technique dite de thermo-coagulation. Cette technique consiste à injecter de la vapeur vive dans un flux de sang pour obtenir la coagulation des protéines et ensuite la fraction coagulée est séparée de son sérum par passage dans une centrifugeuse.

Une telle technique de mise en oeuvre implique de nombreux inconvénients savoir:
– l'utilisation de machines très complexes et fragiles (en particulier les centrifugeuses horizontales ou verticales),
– la consommation de quantités importantes d'énergie, d'une part en vapeur qui est d'autant plus importante que le sang est plus dilué par l'eau de lavage, et d'autre part en énergie électrique du fait des besoins importants de telles machines tournantes et de leurs accessoires;
– un rendement pratique des unités qui est très sensible au critère de fonctionnement et qui peut se traduire par des pertes de matières protéiques importantes;
– des effluents liquides difficiles à éliminer car ils sont chauds, odorants et assez chargés en matières organiques ce qui implique un traitement additionnel avant leur rejet en eau résiduaire,
– l'obligation de recrutement et de formation d'opérateurs très qualifiés.

La présente invention a pour objet un procédé et un appareil de récupération de matières organiques et d'élimination de résidus de sang d'abattoirs qui remédient aux inconvénients de l'art antérieur.

Selon la présente invention on prévoit la mise en contact, le dosage puis la séparation de solutions ou suspensions aqueuses, en particulier de liquides biologiques riches en protéines, comme le sang, les hydrolysats ou les autolysats afin d'en obtenir la coagulation puis l'expression de l'eau des coagulats et enfin la séparation en deux fractions: l'une contenant la totalité de l'extrait sec sous forme d'un gâteau de filtration renfermant environ 35 à 45% de matières actives avec 55 à 65% d'eau résiduaire, l'autre le filtrat contenant les parties solubles, les sels ou les plus petites molécules organiques à raison d'environ 2% d'extrait sec initial dans le milieu aqueux.

Le procédé selon la présente invention prévoit de mettre au contact de la solution à traiter deux produits chimiques soit successivement soit après un mélange préalable.

La présente invention propose donc un procédé de récupération de matières organiques et d'élimination de résidus de sang d'abattoirs qui est caractérisé en ce qu'il comprend les étapes consistant à:
a) collecter le sang à traiter provenant de l'abattage des animaux et à l'acheminer dans un réacteur,
b) animer le sang ainsi collecté d'un mouvement de rotation et de dispersion,

c) introduire dans le sang ainsi traité un sel métallique en quantité suffisante pour que le sang coagule et s'agglomère,

d) additionner une base forte au produit aggloméré tout en continuant à l'animer d'un mouvement de rotation jusqu'à l'apparition d'une dispersion à deux phases distinctes mais mélangées,

e) séparer les deux phases distinctes pour obtenir d'une part une pulpe qui est un produit de valeur et d'autre part un filtrat qui peut être rejeté dans un système d'égout.

La présente invention propose également un appareil de récupération de matières organiques et d'élimination de résidus de sang d'abattoirs qui est caractérisé en ce qu'il comprend un ensemble constitué d'au moins deux réacteurs animés chacun d'un mouvement de rotation, ledit ensemble étant relié d'une part à un moyen de collecte de produits à traiter et d'autre part à deux pompes-doseuses qui acheminent les solutions nécessaires au traitement tandis que l'ensemble tourne et après le traitement le produit traverse un dispositif de filtration pour obtenir tant un gâteau de filtration qu'un filtrat.

La présente invention concerne également les caractéristiques ci-après considérées isolément ou selon toutes leurs combinaisons techniquement possibles:

– le sel métallique est un sel minéral;

– le sel métallique est le chlorure ferrique $FeCl_3$;

– la base forte est choisie parmi la soude, la potasse et la chaux;

– on utilise 20 à 50g de sel ferrique par litre de sang;

– on utilise 10 à 50g de base forte par litre de sang;

– le procédé est mis en oeuvre en continu;

– les réacteurs sont alignés;

– les réacteurs sont superposés;

– chaque réacteur renferme intérieurement une pluralité de spires concentriques entourant un guide interne plein.

Divers avantages et caractéristiques de la présente invention ressortiront de la description détaillée ci-après faite en regard des dessins annexés sur lesquels:

Fig. 1 est un schéma synoptique illustrant le procédé de l'invention.

Fig. 2 est une vue en perspective éclatée de deux réacteurs superposés.

Fig. 3 est une vue en perspective éclatée de deux réacteurs alignés.

Fig. 4 est une vue en perspective de deux réacteurs alignés illustrés de façon partielle.

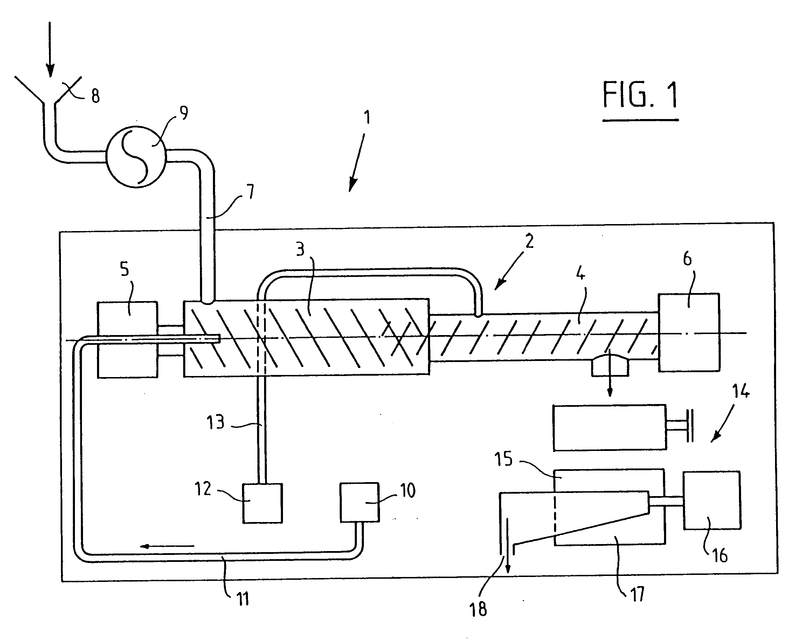

Aux dessins annexés où les mêmes symboles de référence désignent des parties analogues, l'appareil de la présente invention est désigné dans son ensemble par 1. Il comprend un ensemble 2 renfermant au moins deux réacteurs 3, 4. Les réacteurs 3, 4 sont chacun commandés par des moto-réducteurs 5, 6. Une conduite 7 relie l'auge de saignée 8 servant à la collecte du sang à traiter au premier réacteur tubulaire 3. Une pompe de gavage 9 est interposée entre l'auge de saignée 8 et le premier réacteur tubulaire 3. Une pompe doseuse 10 délivre par l'intermédiaire d'un conduit 11 du chlorure ferrique $FeCl_3$ dans le premier réacteur 3 tandis qu'une deuxième pompe 12 délivre par l'intermédiaire d'un conduit 13 une base forte comme de la soude, de la potasse ou de la chaux par l'intermédiaire du conduit 13 au réacteur 3. Le sang à traiter soumis à un mouvement de rotation et d'agitation par l'intermédiaire des moto-réducteurs 5, 6 ayant reçu d'une part le sel métallique et d'autre part la base est séparé dans un moyen de séparation 14 comportant un dispositif de filtration 15 pour donner d'une part un gâteau de filtrage 17 et d'autre part un filtrat 18, le dispositif de filtration 15 étant lui-même dans le mode de réalisation selon la figure 1 que l'on vient de décrire plus haut entraîné par un moto-réducteur 16.

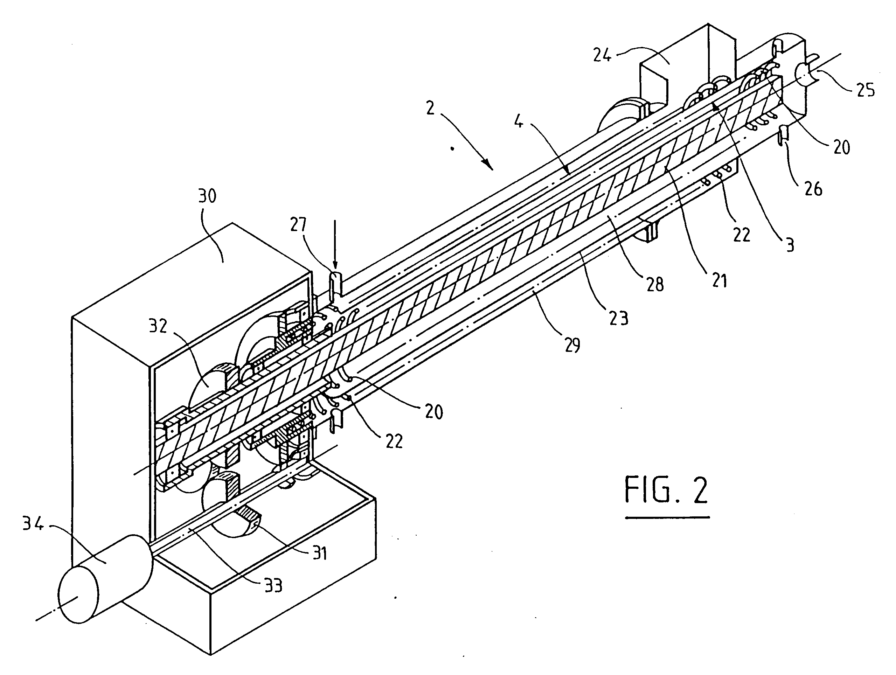

Avant de décrire plus en détails l'appareil selon la présente invention tel qu'il est plus particulièrement illustré sur les figures 2 à 4, on va décrire le procédé en se reportant une nouvelle fois au schéma synoptique de la figure 1.

Le sang recueilli à partir de l'auge de saignée 8 traverse un dispositif d'homogénéisation et de calibrage non représenté sur les dessins qui comprend un tamis de façon à régulariser la granulométrie dudit sang. Le sang est alors injecté tangentiellement en tête du premier réacteur 3 dans lequel un dispositif mécanique comme le moto-réducteur 5 procure un mouvement de rotation constant pour former un vortex en couche mince sur la périphérie intérieure du corps du réacteur 3. Le sang filtré animé d'un tel mouvement centrifuge reçoit l'addition par l'intermédiaire du dispositif 10 et du conduit 11 d'un sel métallique minéral en une quantité de 20 à 50 g de sel par litre de sang, en continu, à température ambiante. L'addition de sel métallique, notamment de chlorure ferrique à pour effet de modifier considérablement la structure du sang qui devient un produit aggloméré et compact dont le transit à l'intérieur du réacteur ne peut être garanti que par une action mécanique de l'organe de transfert. Le moyen de transfert qui est décrit ci-après en liaison avec les figures 2, 3 et 4 est une hélice, un piston, une spire, un ressort et plus généralement tout moyen mécanique de déplacement.

Après un temps de contact intime de quelques secondes du sang ainsi aggloméré, on introduit une base forte par l'intermédiaire du dispositif 12 et du conduit 13 en une quantité de 10 à 50g de base par kg de sang aggloméré dans le deuxième réacteur 4 qui est également animé d'un mouvement de rotation par l'intermédiaire du moto-réducteur 6. Le moto-réducteur 6 est, habituellement identique quant à sa conception au premier moto-réducteur 5 et est situé soit dans le prolongement de celui-ci, comme illustré sur la figure 1 soit il est superposé à ce premier réacteur comme on l'expliquera ci-après en liaison avec la figure 2.

Après les deux traitements avec le sel minéral et la base forte, on obtient un mélange légèrement émulsionné dont la densité apparente est voisine de 0,80 à 0,90 alors que le sang au départ a une densité apparente voisine de 1. Ce mélange est stable, mais pas odorant, il est neutre ou voisin de la neutralité, il se conserve bien et est susceptible d'être séparé par filtration, centrifugation, pressage ou tout moyen approprié. Il est alors envoyé dans le séparateur 14 pour être séparé comme on l'a déjà mentionné par l'intermédiaire du dispositif de filtration 15.

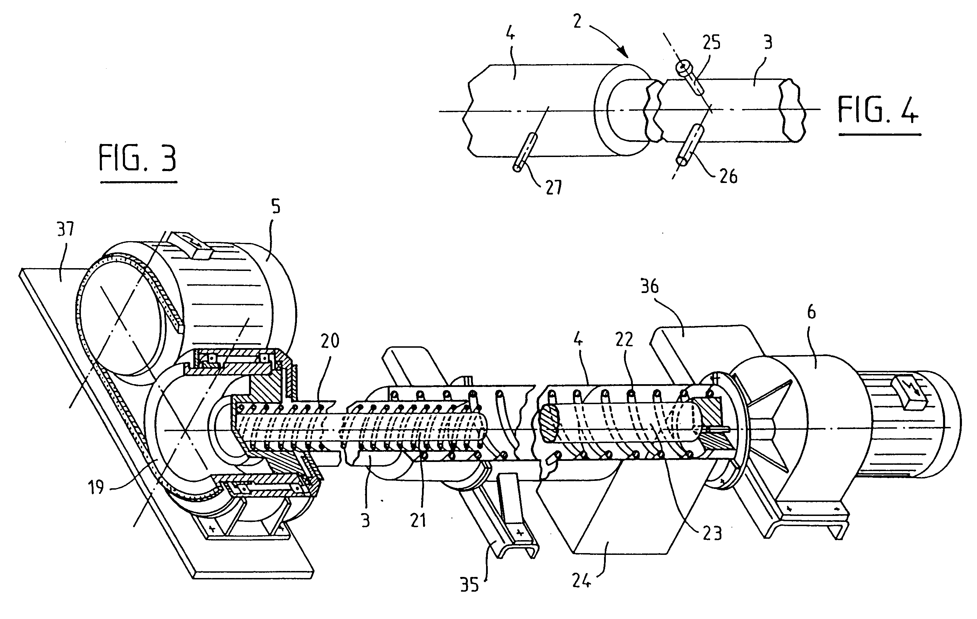

Les figures 2 et 3 illustrent deux modes de réalisation particulièrement préférés de l'invention. Selon le mode de réalisation de la figure 2 qui illustre deux réacteurs superposés où la paroi extérieure du réacteur 3 sert de tube de centrage à l'organe de transport et de transit, la mise en contact est toujours de quelques secondes car elle doit se faire en couche très mince ce qui est possible avec l'ensemble de réacteurs 2 illustré.

Le produit à traiter dans l'exemple considéré du sang entre en 25 et sort en 24. Le sel métallique est injecté dans le premier réacteur 3 en 26. Le premier réacteur 3 comprend sur toute sa longueur des spires concentriques 20 entourant un guide interne de centrage 21. Le premier réacteur tubulaire 3 est situé au-dessus du deuxième réacteur tubulaire 4. Le produit à traiter ayant reçu l'injection de sel métallique est amené dans une zone annulaire de réaction du premier réacteur 3 où il y a formation d'un vortex et transfert par les spires 20 et le guide interne 21. Les spires peuvent être remplacées par des aubes, des pattes ou des doigts aptes à favoriser le transit régulier du matériau en cours de réaction malgré la tendance à l'agglomération ou à l'adhérence aux parois du ou des réacteurs. Après l'introduction de la base par la conduite 27, le produit aggloméré résultant du traitement par le sel est neutralisé au niveau de la zone annulaire 29 du deuxième réacteur 4 avec formation d'un vortex et transfert du produit par l'intermédiaire tant des spires concentriques 22 du deuxième réacteur 4 que du guide de centrage interne 23 du deuxième réacteur 4. Les spires concentriques 20 et 22 des réacteurs 3 et 4 peuvent être à titre d'exemple des spires en acier inoxydable. Dans ce mode de réalisation de la figure 2 les deux réacteurs sont animés d'un mouvement de rotation par l'intermédiaire d'un moteur 34 transmettant sa puissance par un arbre 33 avec des engrenages inférieurs 31 et supérieurs 32. L'ensemble moteur et de transmission est logé dans un boîtier de commande 30.

Dans le mode de réalisation selon la figure 3, le principe de mise en oeuvre de la présente invention diffère simplement en ce que les deux réacteurs 3 et 4 sont alignés au lieu d'être superposés. Sur la figure 3 le réacteur 3 est entraîné par un moto-réducteur 5 tandis que le réacteur 4 est entraîné par un moto-réducteur 6. Les deux moto-réducteurs 5 et 6 comportent des supports 37 et respectivement 36. L'entraînement du moto-réducteur 5 est transmis au réacteur 3 par un embout 19. 35 représente un support des réacteurs 3 et 4. A titre d'exemple la vitesse de rotation des réacteurs 3 et 4 est de 200 à 1000 t/mn et les réacteurs 3 et 4 permettent de traiter plusieurs $m^3$ de sang à l'heure bien qu'il y ait point de limitation quant à la quantité de traitement. On comprend aisément que les réacteurs tels qu'illustrés sur les figures 2 et 3 sont identiques sauf en ce qui concerne le nombre d'organes moteurs pour permettre leur rotation et leur disposition en ligne ou superposée. Pour une bonne mise en oeuvre de la présente invention, il convient d'avoir dans chaque réacteur 3, 4 une zone annulaire désignée par 28 pour le premier réacteur 3 et désignée par 29 dans le deuxième réacteur 4, zones annulaires dans lesquelles est imprimé un vortex pour le transfert du produit en cours de traitement.

La figure 4 illustre simplement comment le produit à traiter est injecté en 25, le sel est introduit en 26 et la base en 27. Dans la présente invention pour le premier traitement on utilise de préférence du chlorure ferrique mais il est également possible d'utiliser un sel de zinc, un sel d'aluminium en quantités appropriées.

On a constaté dans la mise en oeuvre de la présente invention qu'il convenait d'avoir une couche de contact aussi fine que possible entre le sang et le réactif dans le réacteur tubulaire.

On sait que le pH du sang est compris dans la gamme de 6,8 à 7,1 et l'addition du sel ferrique selon la présente invention qui est, de préférence, du $FeCl_3$ mais peut aussi être du $Fe_2(SO_4)_3$ conduit à une prise en masse du sang et ce produit a alors un pH sensiblement dans la gamme de 2. Après l'addition de la base qui est généralement de la chaux dans le produit traité avec le sel métallique et qui a été donc acidifié, on obtient une dispersion de l'agglomérat présentant deux phases distinctes bien qu'elles soient mélangées. Il est alors possible de procéder à une séparation soit par filtration soit par centrifugation et d'obtenir une pulpe qui est un produit de valeur et un filtrat qui peut être traité et notamment rejeté. L'appareil selon la présente invention est un appareil travaillant en couche mince et assurant un transit continu.

La présente invention fournit donc un procédé et un moyen mécanique simple permettant d'obtenir successivement le dosage des composants et des adjuvants en continu, la mise en contact des produits pour le premier traitement avec le sel métallique et la neutralisation avec la base forte enfin la séparation des différentes phases obtenues.

On obtient ainsi la récupération de matières organiques, la possibilité de rejeter un filtrat inoffensif car le procédé et l'appareil de la présente invention sont mis en oeuvre aisément dans le lieu d'abattage même des animaux.

## Revendications

1. Procédé de récupération des matières organiques et spécialement de la matière protéique rejettée en grande quantité par les abattoirs lors du sacrifice des animaux domestiques. Ce procédé est caractérisé en ce qu'il comprend les étapes consistant à :

A - Collecter du sang de façon continue et immédiate jusqu'à des volumes horaires de plusieurs milliers de litres permettant ainsi de suivre le rythme d'abattage des unités industrielles les plus importantes, et à l'acheminer dans les réacteurs,

B - Animer d'un mouvement de rotation et de dispersion le sang ainsi collecté en continu dans les réacteurs coaxiaux afin de garantir une dispersion totale des particules et contact aussi parfait que possible avec les additifs.

C - Ajouter en continu et automatiquement d'une part 20-50 g/l de sang du chlorure ferrique ($FeCl_3$) puis une base forte choisie parmi le soude, la potasse et la chaux dans les conditions de mélanges mécaniques décrites en alinéa A et B avec des dosages limites compris, entre 20 et 50 g/l de sang.

D - Continuer l'action mécanique décrite dans les alinéas A.B.C.jusqu'à ce que le mélange ainsi réalisé se dissocie en deux phases distinctes pour obtenir d'une part, une pulpe qui est un produit de haute valeur et d'autre part, un filtrat qui peut être rejeté comme une eau résiduaire.

2. Procédé selon la revendication 1 caractérisé par le fait que l'on utilise de préférence des bases fortes assimilables en nutrition animale et donc de préférence la chaux.

3. Procédé selon l'une quelconque des revendications 1 à 2, caractérisé en ce qu'il est mis en oeuvre en continu.

4. Appareil de récupération de matières organiques et d'élimination de résidus de sang d'abattoirs, caractérisé en ce qu'il comprend un ensemble (2) constitué d'au moins deux réacteurs (3,4) animés chacun d'un mouvement de rotation, ledit ensemble (2) étant relié d'une part à un moyen de collecte de produit à traiter (8) et d'autre part à deux pompes-doseuses (10,12) qui acheminent les solutions nécessaires au traitement tandis que l'ensemble (2) tourne et après le traitement le produit traverse un dispositif de filtration (15) pour obtenir tant un gâteau de filtratoin (17) qu'un filtrat (18).

5. Appareil selon la revendication 4, caractérisé en ce que chaque réacteur (3,4) renferme intérieurement une pluralité de spires (20,22) concentriques entourant un guide interne plein (21,23).

6. Appareil selon l'une des revendications 4 ou 5, caractérisé en ce que les réacteurs (3,4) sont alignés.

7. Appareil selon l'une des revendications 4 ou 5 caractérisé en ce que les réacteurs (3,4) sont superposés.

## Claims

1. Process for the recovery of organic matter and especially of the protein matter discarded in a large quantity by slaughterhouses when domestic animals are sacrificed. This process is characterised in that it comprises the stages consisting in:

A - Collecting blood continuously and immediately in hourly volumes of up to several thousand litres, thus making it possible to follow the rate of slaughtering of the largest industrial units and in conveying it into reactors.

B - Continuously moving, with a rotational and dispersing motion, the blood,thus collected in coaxial reactors in order to guarantee a complete dispersion of the particles and a contact with the additives which is as perfect as possible.

C - Continuously and automatically adding, on the one hand, 20-50 g/l of blood of ferric chloride ($FeCl_3$) and then a strong base chosen from sodium hydroxide, potassium hydroxide and lime, in mechanical mixing conditions described in paragraph A and B with limiting dosages of between 20 and 50 g/l of blood.

D - Continuing the mechanical action described in paragraphs A.B.C. until the mixture thus produced is dissociated into two separate phases to obtain, on the one hand, a pulp which is a product of high value and, on the other hand, a filtrate which can be discarded as an aqueous waste.

2. Process according to Claim 1, characterised in that strong bases which can be assimilated in animal feeding are preferably employed, and therefore preferably lime.

3. Process according to either of Claims 1 to 2, characterised in that it is carried out continuously.

4. Apparatus for the recovery of organic matter and the removal of blood residues from slaughterhouses, characterised in that it comprises a unit (2) consisting of at least two reactors (3, 4), each driven with a rotational motion, the said unit (2) being connected, on the one hand, to a means for collecting the product to be treated (8) and, on the other hand, to two metering pumps (10, 12) which convey the solutions necessary for the treatment while the unit (2) rotates and after the treatment the product passes through a filtering device (15) to obtain both a filter cake (17) and a filtrate (18).

5. Apparatus according to Claim 4, characterised in that each reactor (3, 4) encloses internally a plurality of concentric turns (20, 22) surrounding a solid internal guide (21, 23).

6. Apparatus according to either of Claims 4 and 5, characterised in that the reactors (3, 4) are aligned.

7. Apparatus according to either of Claims 4 and 5, characterised in that the reactors (3, 4) are superposed.

**Patentansprüche**

1. Verfahren zur Wiedergewinnung organischer Stoffe, und insbesondere von Proteinstoffen, die in großer Menge von Schlachthäusern nach der Tötung von Haustieren abgegeben werden. Dieses Verfahren ist dadurch gekennzeichnet, daß es die folgenden Verfahrensschritte umfaßt:

A. Fortlaufendes und sofortiges Sammeln des Blutes bis zu mehreren tausend Litern stündlich, um der Schlachtfolge der wichtigsten industriellen Einheiten zu folgen, und Fördern in Reaktoren,

B. Bewegen des so gesammelten Bluts in koaxialen Reaktoren mit einer Drehbewegung und einer Bewegung zur Dispersion, um eine vollständige Dispersion der Partikel und eine möglichst gute Berührung mit Zusätzen zu gewährleisten,

C. Fortlaufende und selbsttätige Zugabe eines Anteils von 20 - 50 g/l Blut, von Eisenchlorid (FeCl$_3$), sodann einer starken Base, die ausgewählt ist aus Soda, Pottasche und Kalk, unter mechanischer Beimengung wie in den Absätzen A und B beschrieben, wobei die Dosierungsgrenzen zwischen 20 und 50 g/l Blut eingeschlossen sind,

D. Fortlaufende mechanische Betätigung wie in den Absätzen A, B, C beschrieben, bis die so erhaltene Mischung in zwei bestimmte Phasen dissoziiert, um einerseits einen aus einem Erzeugnis hoher Wertigkeit bestehenden Rückstand und andererseits ein Filtrat zu erhalten, welches wie Restwasser abgeführt werden kann.

2. Verfahren nach Anspruch 1,. dadurch gekennzeichnet, daß vorzugsweise starke Basen verwendet werden, die in tierischer Nahrung assimilierbar sind, und dementsprechend vorzugsweise Kalk.

3. Verfahren nach Anspruch 1 oder 2, dadurch gekennzeichnet, daß es kontinuierlich abläuft.

4. Einrichtung zur Wiedergewinnung organischer Stoffe und zur Abführung von Blutrückständen aus Schlachthäusern, dadurch gekennzeichnet, daß sie eine Einheit (2) umfaßt, die durch wenigstens zwei Reaktoren (3,4) gebildet wird, von denen jeder mit einer Drehbewegung batätigt wird, daß die Einheit (2) einerseits mit einer Sammeleinrichtung des zu behandelnden Stoffs (8) und andererseits mit zwei Dosierpumpen (10, 12) in Verbindung steht, welche die zur Behandlung notwendigen Lösungen fördern, während sich die Einheit dreht, und daß nach der Behandlung das Produkt eine Filtereinrichtung (15) durchläuft, um sowohl einen Filterkuchen (17) als auch ein Filtrat (18) zu erhalten.

5. Einrichtung nach Anspruch 4, dadurch gekennzeichnet, daß jeder Reaktor (3,4) im Innern mehrere Spiralen (20,22) einschließt, die eine innere massive Führung (21,23) umgeben.

6. Einrichtung nach Anspruch 4 oder 5, dadurch gekennzeichnet, daß die Reaktoren (3,4) hintereinander ausgerichtet sind.

7. Einrichtung nach Anspruch 4, oder 5, dadurch gekennzeichnet, daß die Reaktoren (3,4) übereinander angeordnet sind.

FIG. 1

EP 0 332 691 B1

FIG. 2

EP 0 332 691 B1

FIG. 4

FIG. 3